# EUROPÄISCHE PATENTSCHRIFT

(11) **EP 1 431 115 B1**
(45) Veröffentlichungstag und Bekanntmachung des Hinweises auf die Patenterteilung: **05.03.2008**
(21) Anmeldenummer: 03028599.3
(22) Anmeldetag: 11.12.2003
(51) Int. Cl.: B60P 7/15

(54) **Verstellbare Ladungsstange für einen LKW**
Adjustable cargo bar for a lorry
Barre de chargement ajustable pour un camion

(30) Priorität: 19.12.2002 DE 10259739
(43) Veröffentlichungstag der Anmeldung: 23.06.2004
(73) Patentinhaber: BSH Bosch und Siemens Hausgeräte GmbH, 81739 München (DE)
(72) Erfinder: Rohr, Christoph, 89522 Heidenheim (DE)

(56) Entgegenhaltungen:
- DE-A1- 1 781 124
- DE-A1- 10 056 659
- DE-A1- 19 751 938
- US-A- 3 472 180
- US-A- 3 590 746
- US-A- 3 754 516

## Beschreibung

Die vorliegende Erfindung betrifft einen Spriegel für einen Laderaumaufbau eines LKWs und einen Laderaumaufbau, in dem dieser Spriegel zum Einsatz kommt.

Es sind Laderaumaufbauten für LKWs bekannt, z.B. DE 100 56 659, bei denen entlang der Ränder einer Ladefläche eine Mehrzahl von Pfosten montiert ist, die über ihre Höhe verteilt eine Mehrzahl von U-förmigen Aufnahmen tragen. In diese Aufnahmen können sogenannte Spriegel eingehängt werden, bei denen es sich häufig um einfache Bretter handelt, deren Länge dem Abstand der Pfosten voneinander entspricht, so dass ein Spriegel stabil in zwei Aufnahmen von benachbarten Pfosten eingehängt werden kann, um eine stabile Seitenwand des Laderaums zu bilden.

Beim Beladen eines LKWs muss die Ladung gegen Verrutschen gesichert werden, einerseits zum Schutz der Ladung selbst vor Beschädigungen, andererseits auch, um eine Gefährdung von Personal beim Entladen durch verrutschte, nicht mehr stabile Ladung zu verhindern. Eine solche Sicherung kann erfolgen durch Formschluss, das heißt durch Vollausladung des Laderaums ohne Freiräume, oder durch Kraftschluss, das heißt in der Regel durch Verzurren der Ladung an der Ladefläche.

Da wegen der Abmessung der Frachtstücke in der Regel kein Formschluss erreichbar ist, muss meist eine kraftschlüssige Ladungssicherung durchgeführt werden. Eine solche Sicherung ist zeitaufwändig und erfordert oftmals die Verwendung von Füllmaterial wie etwa Luftsäcken, das meist nur einmal verwendet wird und die Frachtkosten unerwünscht erhöht.

Aufgabe der Erfindung ist, Mittel bereitzustellen, die ein formschlüssiges Beladen eines LKWs erleichtern und das Verzurren der Ladung sowie die Verwendung von Füllmaterial zur Ladungsstabilisierung in vielen Fällen überflüssig machen.

Die Aufgabe wird zum einen gelöst durch einen Spriegel mit den Merkmalen des Anspruchs 1. Wenn ein solcher Spriegel in einem Laderaumaufbau eingesetzt ist, erlaubt es dessen zweiteiliger Aufbau, diejenige seiner zwei Leisten, die nicht fest mit dem Aufbau verbunden ist, quer zu ihrer Längsrichtung, das heißt ins Innere des Laderaums hinein, zu verstellen, um sie in Kontakt mit Ladegut zu bringen und so einen Formschluss herzustellen.

Um die Ausladung des Spriegels in den Laderaum im Bedarfsfalle möglicht klein machen zu können, ist bevorzugt, dass wenigstens eine der Leisten einen Längskanal aufweist, in den die andere Leiste eingreift, wenn sich die zwei Leisten in einer eng benachbarten Stellung befinden. Längskanäle der zwei Leisten können auch gut dazu benutzt werden, in ihnen einen Verstellmechanismus zum Einstellen des Abstandes der Leisten quer zur Längsrichtung unterzubringen.

Ein solcher Verstellmechanismus weist zweckmäßigerweise eine Mehrzahl von Armen auf, die einerseits an einen festen Punkt der ersten Leiste und andererseits verschiebbar an die zweite Leiste angelenkt sind, so dass je nach Ausmaß einer Schrägstellung der Arme die Leisten unterschiedliche Abstände einnehmen können.

Die Verschiebbarkeit der Arme an der zweiten Schiene ist vorzugsweise durch einen entlang der zweiten Leiste verschiebbaren Gleiter realisiert, an den die Arme angelenkt sind.

Zum Verschieben des Gleiters entlang der zweiten Leiste und damit zum Einstellen der Entfernung zwischen den zwei Leisten ist der Gleiter einer bevorzugten Ausgestaltung zufolge an einen arretierbaren Schwenkhebel angelenkt.

Einer zweiten Ausgestaltung zufolge ist der Gleiter mit einer an der zweiten Leiste drehbar gehaltenen Gewindestange in Eingriff, so dass er sich bei Drehung der Gewindestange an dieser entlang verschiebt.

Die Leisten haben vorzugsweise die Gestalt von U-Profilen, beispielsweise aus Stahl, Leichtmetall oder faserverstärktem Kunststoff.

Bei einem in einem Laderaumaufbau montierten Spriegel verlaufen vorzugsweise wenigstens zwei Arme von ihren mit der an den Pfosten des Aufbaus gehaltenen Leiste verbundenen Enden aus zu den mit der verstellbaren Leiste verbundenen Enden hin aufeinander zu. Je näher die Enden dieser zwei Arme an den unterstützten Enden der von den Pfosten gehaltenen Leiste liegen, umso geringer ist die Biegebelastung, welcher diese Leiste durch gegen die andere Leiste drückende Fracht ausgesetzt ist. Die Festigkeit der gehaltenen Leiste kann daher geringer sein als die der der Fracht zugekehrten Leiste des erfindungsgemäßen Spriegels bzw. die Festigkeit eines herkömmlichen einteiligen Spriegels, wodurch Kosten und Gewicht gespart werden können.

Weitere Merkmale der vorliegenden Erfindung ergeben sich aus der nachfolgenden Beschreibung von Ausführungsbeispielen unter Bezugnahme unter Bezugnahme auf die beigefügten Figuren. Es zeigen:
- Fig. 1: eine perspektivische Ansicht eines LKW-Laderaumaufbaus gemäß der vorliegenden Erfindung;
- Fig.2: eine Seitenansicht einer ersten Ausgestaltung des erfindungsgemäßen Spriegels, gesehen von der dem Inneren des Laderaums zugewandten Seite her;
- Fig. 3: einen schematischen Schnitt durch den Spriegel der Fig. 2; und
- Fig. 4: einen schematischen Schnitt analog dem der Fig. 3 durch eine zweite Ausgestaltung des erfindungsgemäßen Spriegels.

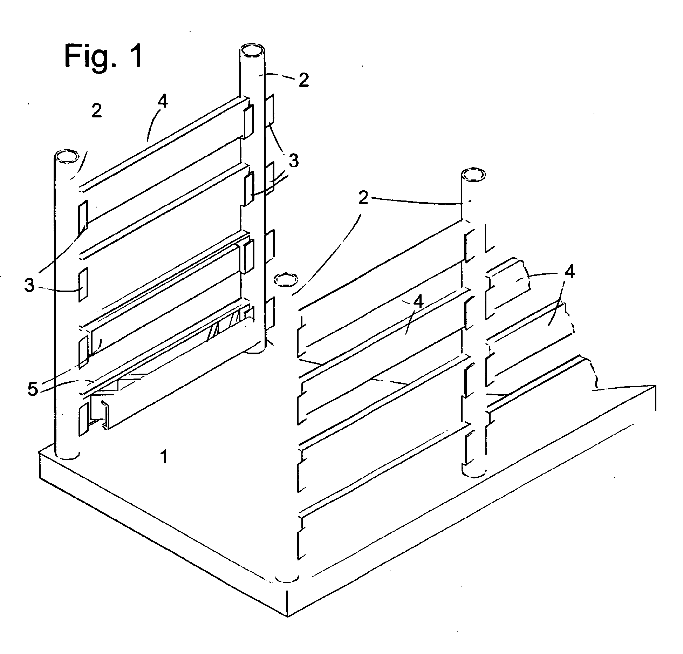

Der in Fig. 1 gezeigte Laderaumaufbau umfasst eine ebene Ladefläche 1, an deren Rändern eine Mehrzahl von Pfosten 2 verankert sind. Die Pfosten 2 sind in der Fig. abgeschnitten dargestellt; in der Praxis sind sie meist durch die Ladefläche 1 quer überspannende Bögen paarweise verbunden, welche die Pfosten stabilisieren und gleichzeitig als Träger für eine Abdeckplane dienen können.

An die Pfosten 2 aus Stahlrohr sind in regelmäßigen Abständen U-förmige Aufnahmen 3 angeschweißt, die sich paarweise gegenüberliegen und jeweils die Enden eines Spriegels 4, 5 aufnehmen. Die Spriegel 4 sind herkömmliche einteilige Leisten; die Spriegel 5 weisen jeweils eine äußere Leiste 6 und eine innere Leiste 7 in Form eines U-Profils auf. Die äußere Leiste 6 greift mit ihren Enden in die Aufnahmen 3 zweier Pfosten 2 ein; die innere Leiste 7 ist mit der äußeren Leiste 6 quer zur Längsrichtung der Leisten, horizontal ins Innere des Laderaums hinein, verstellbar. Sie ist geringfügig kürzer als die äußere Leiste 6, so dass sie zwischen einer ausgefahrenen Stellung und einer eingefahrenen Stellung, in der sie in einen Längskanal 8 der äußeren Leiste 6 eintaucht, verstellbar ist, ohne an die Aufnahmen 3 zu stoßen.

Es müssen nicht alle Spriegel des Laderaumaufbaus zweiteilige Spriegel 5 sein; um eine formschlüssige Ladungsfixierung zu erreichen, genügt es meist, wenn nur an einer Seitenwand des Aufbaus, in Fig. 1 der vom Betrachter abgewandten Seitenwand, verstellbare Spriegel 5 vorhanden sind, und auch dort genügt häufig die Verstellbarkeit nur eines Teils der Spriegel, um eine brauchbare Sicherung zu erreichen.

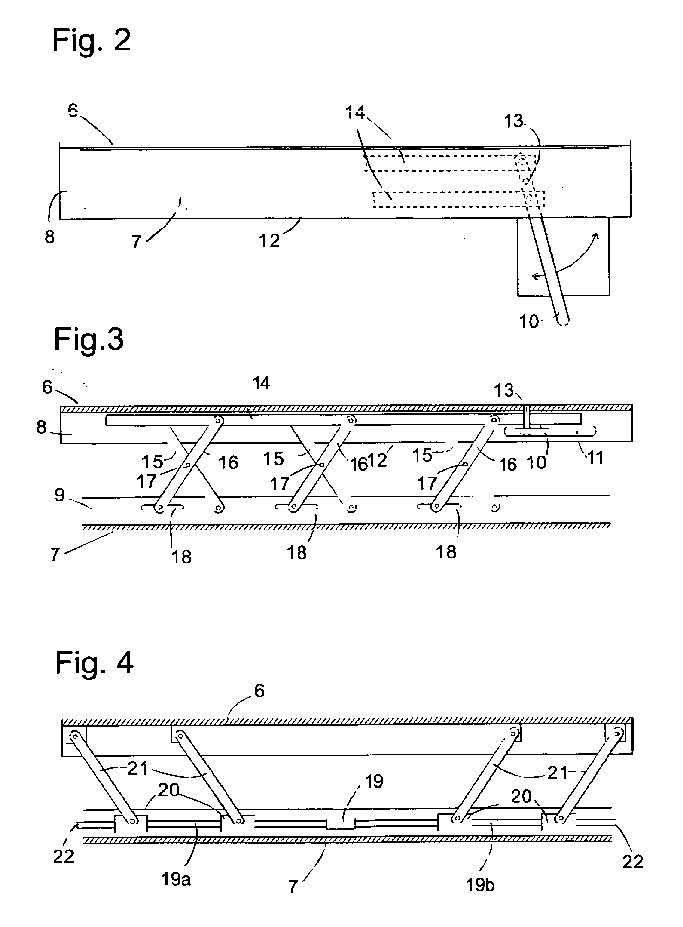

Fig. 2 und 3 zeigen eine erste Ausgestaltung des erfindungsgemäßen Spriegels 5 in Seitenansicht bzw. im Schnitt. Wie Fig. 2 zeigt, ist die äußere Leiste 6 höher als die innere 7, so dass beide Schenkel des U-Profils der inneren Leiste 7 in den Längskanal 8 der äußeren Leiste 6 eintauchen und im vollständig eingefahrenen Zustand sich am Boden des Längskanals 8 abstützen. Selbstverständlich könnten die Höhen der Leisten 6, 7 auch gleich sein, so dass im eingefahrenen Zustand ein Schenkel der inneren Leiste 7 den Boden des Längskanals 8 berührt und umgekehrt ein Schenkel der äußeren Leiste 6 in einen Längskanal 9 der inneren Leiste 7 eintaucht, oder die innere Leiste 7 könnte die höhere der beiden sein.

Ein arretierbarer Schwenkhebel 10 erstreckt sich durch einen Schlitz 11 im unteren Schenkel 12 der äußeren Leiste 6 und ist um eine mittig in dem Längskanal 8 verankerte Achse 13 drehbar. An den Schwenkhebel 10 sind zwei stangenförmige Gleiter 14 angelenkt, die, weil durch die innere Leiste 7 verdeckt, in Fig. 2 nur teilweise und gestrichelt dargestellt sind. Durch eine Drehung des Schwenkhebels 10 sind die Gleiter 14 jeweils zu gegenläufigen Bewegungen in Längsrichtung der Leiste 6 antreibbar.

An jeden der Gleiter 14 sind mehrere Arme 15, 16 angelenkt, wobei die an den unteren Gleiter 14 angelenkten Arme 15 und die an den oberen Gleiter angelenkten Arme 16 einander jeweils paarweise in einem Gelenk 17 kreuzen und eine Gruppe dieser Arme, beim dargestellten Beispiel die Arme 15, jeweils an einen festen Punkt der inneren Leiste 7 angelenkt sind, während die Enden der Arme 16 jeweils in Schlitzen 18 der inneren Leiste 7 verschiebbar sind. Die Arme 15, 16 bilden so einen Scherenmechanismus, der den Abstand der Leisten 6, 7 entsprechend einer am Schwenkhebel 10 eingestellten Position variiert.

Eine zweite Ausgestaltung des erfindungsgemäßen Spriegels ist in Fig. 4 im Schnitt dargestellt. Bei dieser Ausgestaltung ist in der inneren Leiste 7 eine Gewindestange 19 drehbar gehalten, die zwei Abschnitte 19a, 19b mit jeweils entgegengesetztem Drehsinn aufweist. Jeder dieser Abschnitte trägt zwei Gleitsteine 20, an den jeweils ein Ende eines Arms 21 angelenkt ist. Das andere Ende jedes Arms 21 ist an der äußeren Leiste 6 angelenkt. Um die Gewindestange 19 zügig, z.B. mit einem elektrischen Schraubwerkzeug, drehen zu können, ist an wenigstens einem, vorzugsweise an beiden Enden 22 der Gewindestange 19 ein Schraubenkopf vorgesehen.

Die zwei außenliegenden Arme 21 greifen an der äußeren Leiste 6 jeweils nahe an deren in die Aufnahmen der Pfosten eingerasteten Enden an. Auf diese Weise wird ein Druck der Ladung, der auf die innere Leiste 7 wirkt, auf die Pfosten 2 übertragen, ohne dass eine starke Biegebelastung auf die äußere Leiste 6 wirkt. Deren Biegefestigkeit kann daher deutlich geringer sein als die der inneren Leiste 7. Das zweite, innere Paar von Armen 21 ist erforderlich, um die zwei Leisten 6, 7 stabil in einer zueinander parallelen Orientierung zu halten.

## Patentansprüche

1. Spriegel für einen LKW-Aufbau mit einer langgestreckten ersten Leiste (6; 7), **dadurch gekennzeichnet, dass** an der ersten Leiste (6; 7) eine zweite Leiste (7; 6) quer zu der Längsrichtung der Leisten verstellbar befestigt ist.

2. Spriegel nach Anspruch 1, **dadurch gekennzeichnet, dass** wenigstens eine der Leisten (6; 7) einen Längskanal (8; 9) aufweist, in den die andere Leiste (7; 6) in einer eng benachbarten Stellung der Leisten eingreift.

3. Spriegel nach Anspruch 2, **dadurch gekennzeichnet, dass** die Leisten (6; 7) einander zugewandte Längskanäle (8; 9) aufweisen, in denen ein Verstellmechanismus (13, 14, 15, 16, 17; 19, 20, 21) zum Verstellen der Leisten (6; 7) gegeneinander untergebracht ist.

4. Spriegel nach Anspruch 3, **dadurch gekennzeichnet, dass** der Verstellmechanismus (13, 14, 15, 16, 17; 19, 20, 21) eine Mehrzahl von Armen (15; 21) umfasst, die einerseits an einen festen Punkt der ersten Leiste (7; 6) und andererseits verschiebbar an die zweite Leiste (6; 7) angelenkt sind.

5. Spriegel nach Anspruch 4, **dadurch gekennzeichnet, dass** die Arme (15; 21) an einen entlang der zweiten Leiste verschiebbaren Gleiter (13, 14; 20) angelenkt sind.

6. Spriegel nach Anspruch 5, **dadurch gekennzeichnet, dass** der Gleiter (13, 14) an einen arretierbaren Schwenkhebel (10) angelenkt ist.

7. Spriegel nach Anspruch 5, **dadurch gekennzeichnet, dass** der Gleiter (20) mit einer an der zweiten Leiste drehbar gehaltenen Gewindestange (19) in Eingriff ist.

8. Spriegel nach einem der vorhergehenden Ansprüche, **dadurch gekennzeichnet, dass** die Leisten (6; 7) U-Profile sind.

9. LKW-Laderaumaufbau mit einer Mehrzahl von an Pfosten (2) gehaltenen Spriegeln (4, 5), **dadurch gekennzeichnet, dass** wenigstens ein Spriegel (5) nach einem der vorhergehenden Ansprüche darunter ist.

10. LKW-Laderaumaufbau nach Anspruch 9, **dadurch gekennzeichnet, dass** der Spriegel (5) zwei Arme (21) aufweist, die von ihren mit der an den Pfosten (2) gehaltenen Leiste (6) verbundenen Enden aus zu den mit der verstellbaren Leiste (7) verbundenen Enden hin aufeinander zulaufen.

## Claims

1. Cargo bar for a truck superstructure with an elongate first strip (6; 7), **characterised in that** a second strip (7; 6) is fastened to the first strip (6; 7) to be adjustable transversely to the longitudinal direction of the strips.

2. Cargo bar according to claim 1, **characterised in that** at least one of the strips (6; 7) has a longitudinal channel (8; 9) in which the other strip (7; 6) engages in a closely adjacent setting of the strips.

3. Cargo bar according to claim 2, **characterised in that** the strips (6; 7) have mutually facing longitudinal channels (8; 9) in which an adjusting mechanism (13, 14, 15, 16, 17; 19, 20, 21) for adjusting the strips (6; 7) relative to one another is accommodated.

4. Cargo bar according to claim 3, **characterised in that** the adjusting mechanism (13, 14, 15, 16, 17; 19, 20, 21) comprises a plurality of arms (15; 21) which on the one hand are articulated at a fixed point of the first strip (7; 6) and on the other hand displaceably articulated to the second strip (6; 7).

5. Cargo bar according to claim 4, **characterised in that** the arms (15; 21) are articulated to a slide (13, 14; 20) displaceable along the second strip.

6. Cargo bar according to claim 5, **characterised in that** the slide (13, 14) is articulated to a lockable pivot lever (10).

7. Cargo bar according to claim 5, **characterised in that** the slide (20) is in engagement with a threaded rod (19) rotatably mounted at the second strip.

8. Cargo bar according to one of the preceding claims, **characterised in that** the strips (6; 7) are U-profile members.

9. Truck load space superstructure with a plurality of cargo bars (4, 5) mounted at posts (2), **characterised in that** at least one cargo bar (5) according to one of the preceding claims is underneath.

10. Truck load space superstructure according to claim 9, **characterised in that** the cargo bar (5) comprises two arms (21), which run from their ends, which are connected with the strip (6) retained at the posts (2), towards one another to the ends connected with the adjustable strip (7).

## Revendications

1. Arceau pour une carrosserie de camion, comprenant une première barre allongée (6; 7), **caractérisée en ce qu'**une seconde barre (7; 6) est fixée sur la première barre (6; 7) d'une manière permettant un réglage perpendiculairement à la direction longitudinale des barres.

2. Arceau selon la revendication 1, **caractérisée en ce qu'**au moins une des barres (6; 7) est pourvue d'un canal longitudinal (8; 9) dans lequel l'autre barre (7; 6) s'engage dans une position étroitement voisine des barres.

3. Arceau selon la revendication 2, **caractérisée en ce que** les barres (6; 7) sont pourvues de canaux longitudinaux (8; 9) tournés l'un vers l'autre dans lesquels est logé un mécanisme de réglage (13, 14, 15, 16, 17; 19, 20, 21) servant au réglage des barres (6; 7) l'une par rapport à l'autre.

4. Arceau selon la revendication 3, **caractérisée en ce que** le mécanisme de réglage (13, 14, 15, 16, 17; 19, 20, 21) comprend une pluralité de bras (15; 21) qui sont articulés d'une part au niveau d'un point fixe de la première barre (7; 6) et d'autre part de manière mobile sur la deuxième barre (6; 7).

5. Arceau selon la revendication 4, **caractérisée en ce que** les bras (15; 21) sont articulés sur un élément coulissant (13, 14; 20) mobile le long de la seconde barre.

6. Arceau selon la revendication 5, **caractérisée en ce que** l'élément coulissant (13, 14) est articulé sur un levier pivotant (10) pouvant être verrouillé.

7. Arceau selon la revendication 5, **caractérisée en ce que** l'élément coulissant (20) est en prise avec une tige filetée (19) maintenue de manière rotative sur la seconde barre.

8. Arceau selon l'une des revendications précédentes, **caractérisée en ce que** les barres (6; 7) sont des profilés en U.

9. Carrosserie de compartiment à marchandises de camion comprenant une pluralité d'arceaux (4, 5) maintenus sur des montants (2), **caractérisée en ce qu'**au moins un arceau (5) selon l'une des revendications précédentes est situé parmi eux.

10. Carrosserie de compartiment à marchandises de camion selon la revendication 9, **caractérisée en ce que** l'arceau (5) comprend deux bras (21) qui se rapprochent l'un de l'autre de leurs extrémités reliées à la barre (6) maintenue sur les montants (2) en direction des extrémités reliées à la barre réglable (7).
